# EUROPEAN PATENT SPECIFICATION

(11) **EP 0 635 913 B1**
(45) Date of publication and mention of the grant of the patent: **06.10.1999**
(21) Application number: 94305433.8
(22) Date of filing: 22.07.1994
(51) Int. Cl.: H01R 39/56, H02K 13/00

(54) **Miniature motor**
Kleinmotor
Moteur miniature

(30) Priority: 23.07.1993 JP 18260993
(43) Date of publication of application: 25.01.1995
(73) Proprietor: MABUCHI MOTOR KABUSHIKI KAISHA, Matsudo-shi, Chiba-ken (JP)
(72) Inventor: Yoshimura, Kazutoshi, Mabuchi Motor K.K., Inba-gun, Chiba-ken (JP); Shibuya, Isao, Mabuchi Motor K.K., Inba-gun, Chiba-ken (JP); Hagiwara, Kenji, Mabuchi Motor K.K., Inba-gun, Chiba-ken (JP)
(74) Representative: Hitchcock, Esmond Antony

(56) References cited:
- EP-A- 0 209 617
- US-A- 2 703 372
- PATENT ABSTRACTS OF JAPAN, unexamined applications, C field, vol. 10, no. 219, July 31, 1986; THE PATENT OFFICE JAPANESE GOVERNMENT page 6 C 363; & JP-A-61 55 195 (MATSUSHITA)
- PATENT ABSTRACTS OF JAPAN, unexamined applications, E field, vol. 9, no. 332, December 26, 1985 THE PATENT OFFICE JAPANESE GOVERNMENT page 50 E 370; & JP-A-60 162 449 (MATSUSHITA)

## Description

This invention relates to a miniature motor of the type commonly used in for example, audio and video equipment, and in precision equipment of many kinds.

In a miniature motor, the brushes and the commutator may wear out quickly as a result of arcing or Joule heating, generated at the sliding contact area between the brushes and the commutator or because of the physical contact therebetween. This abnormal wear can adversely affect the electrical connection between the brushes and the commutator, reducing the stability of the motor and therefore shortening its service life. The presence in such a motor of an atmosphere comprising an organic gas can lead to the production of black insulating polymers on the sliding contact area between the brushes and the commutator, as a result of arcing or Joule heating as mentioned above. These insulating polymers may make the contact between the brushes and the commutator unstable, increasing the contact resistance. This can also reduce the service life of the motor.

European Patent Specification No. 0 209 617 discloses a small electric motor in which the case is filled with an atmosphere containing vapour of one or more specified organic compounds. U.S. Patent No. 2 703 372 is also concerned with the introduction of vapours into electrical machines particularly in the regions of the machine where there is sliding electrical contact.

In Japanese Published Unexamined Patent Application No. Sho-60 (1985)-162449 a motor is disclosed in which a polyvalent alcohol is enclosed within the case. While this results in some improvement in motor performance in the above respects, because its molecular weight is low the polyvalent alcohol readily evaporates, making its atmosphere in the motor case short-lived. Thus, the polyvalent alcohol does not have a lasting effect.

The present invention is directed at a miniature motor in which abnormal wear, as described above, of the sliding contact surface of the commutator is at least reduced, and the generation of contaminating polymers caused by sliding contact between the commutator and the brushes can be substantially avoided.

A motor of the type to which the invention relates has a metallic tubular case closed at one end with a permanent magnet fitted to the inner surface thereof; a case cap fitted to the open end of the case; a rotor comprising an armature and a commutator, and being rotatably supported by bearings provided on the closed end of the case and on the case cap; brushes supported on the case cap for making sliding contact with the commutator; and input terminals electrically connected to the brushes. According to the invention, the atmosphere enclosed by the case and case cap comprises a polymer having a molecular weight of 250 to 5000, the polymer being one of polyoxyalkylene glycol diesters and polyoxyalkylene glycol monoesters. The polymer can be held in a porous material disposed in the motor case from which it vaporises and permeates the atmosphere. The controlled atmosphere within the motor serves to reduce abnormal wear and contamination of the contact surfaces of the commutator and the brushes, resulting in stable performance and increased service life for the motor.

The invention will now be described by way of example and with reference to the accompanying schematic drawing which shows in partial section a motor suitable for adaptation according to the invention.

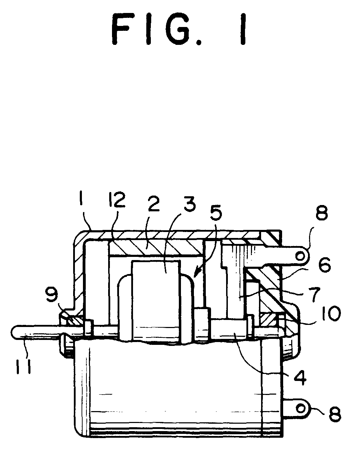

The motor shown in the drawing has a tubular case 1 made of a metallic material, such as mild steel. An arc-segment shaped permanent magnet 2 is fixedly fitted to its inner surface, and a rotor 5 comprising an armature 3 facing the permanent magnet 2, and a commutator 4, is rotatably mounted in bearings 9, 10 in the case 1 and a case cap 6 made of an insulating material, such as a synthetic resin, and fitted to an open end of the case 1. Brush arms 7 (one is shown) adapted to make sliding contact with the commutator 4 are fitted to the case cap 6, and an input terminal 8 also fitted to the cap and is electrically connected to each brush arm 7. Thus, as current is fed to the input terminals 8, the motor operates in a known manner to drive external equipment (not shown) via the shaft 11 on the output side.

In tests, ten miniature motors of the kind shown in the drawing were prepared, each motor having a gap 12 between the case 1 and the permanent magnet 2. The gap was filled with polyethylene glycol caprinate diester in five of the motors, and with polyethylene glycol laurate monoester in the other five. In this way, an atmosphere of one of these polymers was maintained in the internal space enclosed by the case 1 and the case cap 6.

Miniature motors were also prepared without the addition of a polymer, or with an atmosphere including a polyvalent alcohol (diethylene glycol, for example), as disclosed in the aforementioned Japanese Published Unexamined Patent Application No. Sho-60(1985)-162449, to act as controls.

Table 1 shows the results of cyclic tests in which a 30 g/cm pulley load was applied to the miniature motors, each having an operating specification of 12 V, about 1.3W and 4,400 rpm. The motors were operated according to the following sequence: a 2 second stop, a 4 second clockwise rotation, a 2 second stop, a 4 second counterclockwise rotation.

**Table 1**

| Classification | Atmosphere | No. | Time elapsed until motor failure (hr) | Average life (hr) |
|---|---|---|---|---|
| | Polyethylene glycol diester caprinate | 1 | (1200) | |
| | | 2 | (1200) | More than 1200 |
| | | 3 | (1200) | |
| | | 4 | (1200) | |
| This | | 5 | (1200) | |
| invention | Polyethylene glycol monoester laurate | 1 | (1200) | |
| | | 2 | (1200) | More than 1200 |
| | | 3 | (1200) | |
| | | 4 | (1200) | |
| | | 5 | (1200) | |
| Control (1) | Ethylene glycol | 1 | 605 | |
| | | 2 | 433 | |
| | | 3 | 480 | 498 |
| | | 4 | 407 | |
| | | 5 | 565 | |
| Control (2) | Atmosphere | 1 | 490 | |
| | | 2 | 419 | |
| | | 3 | 373 | 410 |
| | | 4 | 348 | |
| | | 5 | 419 | |

As shown in Table 1, with the control (2) in which there was no addition to the internal atmosphere, although there is a scatter in the time elapsed until motor failure through wear, the average life of the motors is extremely short. In control (1) the service life is only extended by a factor of about 1.2, and again there is a scatter in the time elapsed before motor failure. The miniature motors embodying the invention however, operated without stoppage for over 1200 hours. Thus, the average life of the motors used in the tests is greater than that of control (2) by a factor of more than 2.9, and than that of control (1) by a factor of more than 2.4.

With the respective polymer disposed in the gap 12 vapour evolves gradually from the polymer into the space enclosed by the case and the case cap and is adsorbed by the sliding contact area between the commutator and the brushes, where it acts as a lubricant. Thus, the abnormal wear of the sliding contact area and the generation of insulating polymers may be prevented. The atmosphere-forming polymers are difficult to decompose or oxidise at normal temperatures, stable to light and prolonged heating, and have good weather resistance and ageing resistance.

Polymers used to form the atmospheres in motors according to the invention should preferably have molecular weights of 250 to 5000.

The polymer may be provided by soaking a porous material, such as absorbent wadding, felting or sponge in the fluid. Alternatively, the polymer may be caused to impregnate, deposit on, adsorb on, percolate into, or mix with the permanent magnet, case, armature, commutator, brushes, brush arms, case cap, bearing, bearing oil and other component members, or may be inserted or caused to infiltrate between these component members. Broadly, any means which facilitates the formation of the required atmosphere around the sliding contact area between the commutator and the brushes may be employed.

Polyoxyalkylene glycol diester is an example of a polymer which may be used to form the atmosphere in addition of course to the polyethylene glycol diester caprinate of molecular weight (Mw) = 708, shown in Table 1:

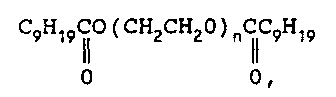

Other suitable diesters are:
Polyethylene glycol diester laurate (Mw = 764) 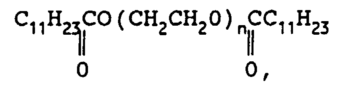
polyethylene glycol diester myristate (Mw = 820) 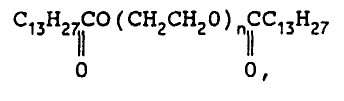
polyethylene glycol diester palmitate (Mw = 876) 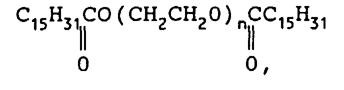
polyethylene glycol diester stearate (Mw = 932) 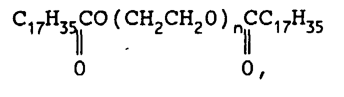
polypropylene glycol diester myristate (Mw = 820) 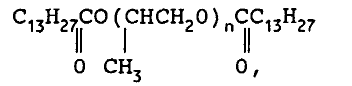
and polypropylene glycol diester palmitate (Mw = 876)

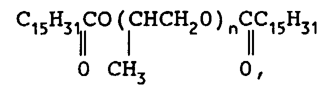

Polyoxyalkylene glycol monoesters may also be used as atmosphere-forming polymers in addition to the polyethylene glycol monoester laurate (Mw = 382) shown in Table 1:

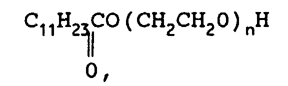

Other suitable monoesters are:
Polyethylene glycol monoester caprinate (Mw = 354) 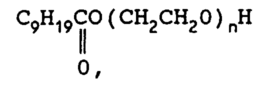
polyethylene glycol monoester myristate (Mw = 410) 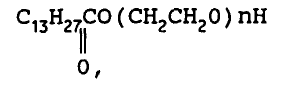
polyethylene glycol monoester palmitate (Mw = 438) and 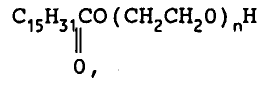 and
polyethylene glycol monoester stearate (Mw = 466)

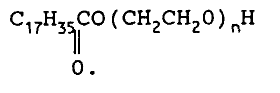

The invention as described above can prevent the initial wear of the sliding contact area between the commutator and the brushes, and insulating polymers from being generated in this region. Even in an organic-gas atmosphere, the invention provides substantially the same benefits, as the sliding contact area is protected by a monomolecular or polymolecular film consisting of the atmosphere-forming polymer. This leads to a reduced and stabilised contact resistance, and therefore serves to stabilise the motor's performance and extend its useful life.

## Claims

1. A miniature motor having a metallic tubular case (1) closed at one end with a permanent magnet (2) fitted to the inner surface of the case; a case cap (6) fitted to the open end of the case (1); a rotor (5) comprising an armature (3) and a commutator (4), and being rotatably supported by bearings (9,10) provided on the closed end of the case (1) and on the case cap (6); brushes supported on the case cap for making sliding contact with the commutator (4); and input terminals (8) electrically connected to the brushes
CHARACTERISED IN THAT
the atmosphere enclosed by the case (1) and case cap (6) comprises a polymer having a molecular weight of 250 to 5000, the polymer being one of polyoxyalkylene glycol diester and a polyoxyalkylene glycol monoester.

2. A miniature motor according to Claim 1 wherein the polymer is any one of
polyethylene glycol diester caprinate,
polyethylene glycol diester laurate,
polyethylene glycol diester myristate,
polyethylene glycol diester palmitate,
polyethylene glycol diester stearate,
polypropylene glycol diester myristate, and
polypropylene glycol diester palmitate
of the polyoxyalkylene glycol diester family.

3. A miniature motor according to Claim 1 wherein the polymer is any one of
polyethylene glycol monoester caprinate,
polyethylene glycol monoester laurate,
polyethylene glycol monoester myristate,
polyethylene glycol monoester palmitate, and
polyethylene glycol monoester stearate
of the polyoxyalkylene glycol monoester family.

4. A miniature motor according to any preceding Claim wherein the space defined by the case (1) and case cap (6) is filled with an atmosphere of said polymer.

5. A miniature motor according to any preceding Claim wherein a porous material adapted to hold said polymer prior to vapourisation is disposed within the motor case (1).

## Patentansprüche

1. Miniaturmotor, aufweisend ein metallisches zylinderförmiges Gehäuse (1), das an einem seiner Enden mit einem Permanentmagneten (2) verschlossen ist, der an der Innenfläche des Gehäuses angebracht ist, eine Gehäuseabdeckung (6), die am offenen Ende des Gehäuses (1) angebracht ist, einen Rotor (5), der einen Anker (3) und einen Kommutator (4) enthält und drehbar durch Lager (9, 10) gehalten wird, die am geschlossenen Ende des Gehäuses (1) und an der Gehäuseabdeckung (6) vorgesehen sind, Bürsten, die von der Gehäuseabdeckung gehalten werden, so daß sie einen Gleitkontakt mit dem Kommutator (4) bilden, und Eingabeanschlüsse (8), die elektrisch mit den Bürsten verbunden sind,
**dadurch gekennzeichnet**,
daß die Atmosphäre, die von dem Gehäuse (1) und der Gehäuseabdeckung (6) umgeben ist, ein Polymer mit einem Molekulargewicht von 250 bis 5.000 aufweist, wobei das Polymer aus Polyoxyalkylenglycoldiester und Polyoxyalkylenglycolmonoester ausgewählt ist.

2. Miniaturmotor nach Anspruch 1, wobei das Polymer ein beliebiges aus
Polyethylenglycoldiestercaprinat,
Polyethylenglycoldiesterlaurat,
Polyethylenglycoldiestermyristat,
Polyethylenglycoldiesterpalmitat,
Polyethylenglycoldiesterstearat,
Polypropylenglycoldiestermyristat und
Polypropylenglycoldiesterpalmitat
aus der Polyoxyalkylenglycoldiesterfamilie ist.

3. Miniaturmotor nach Anspruch 1, wobei das Polymer ein beliebiges aus
Polyethylenglycolmonoestercaprinat,
Polyethylenglycolmonoesterlaurat,
Polyethylenglycolmonoestermyristat,
Polyethylenglycolmonoesterpalmitat und
Polyethylenglycolmonoesterstearat
aus der Polyoxyalkylenglycolmonoesterfamilie ist.

4. Miniaturmotor nach einem der vorhergehenden Ansprüche, wobei der Raum, der von dem Gehäuse (1) und der Gehäuseabdeckung (6) umgeben ist, mit einer Atmosphäre aus diesen Polymeren gefüllt ist.

5. Miniaturmotor nach einem der vorhergehenden Ansprüche, wobei ein poröses Material, das geeignet ist, das Polymer vor der Verdampfung zu speichern, in dem Motorgehäuse (1) angeordnet ist.

## Revendications

1. Moteur miniature ayant un boîtier tubulaire métallique (1) fermé à une extrémité, avec un aimant permanent (2) fixé à la surface interne du boîtier, un couvercle de boîtier (6) fixé à l'extrémité ouverte du boîtier (1), un rotor (5) comprenant un induit (3) et un collecteur (4) et soutenu en rotation par des paliers (9, 10) prévus sur l'extrémité fermée du boîtier (1) et sur le couvercle de boîtier (6), des balais supportés sur le couvercle de boîtier pour établir un contact coulissant avec le collecteur (4), et des bornes d'entrée (8) reliées électriquement aux balais, caractérisé en ce que l'atmosphère enfermée par le boîtier (1) et le couvercle de boîtier (6) comprend un polymère ayant une masse moléculaire de 250 à 5000, le polymère étant un polymère parmi un diester de polyoxyalkylèneglycol et un monoester de polyoxyalkylèneglycol.

2. Moteur miniature selon la revendication 1 dans lequel le polymère est un polymère quelconque parmi
le dicaprate de polyéthylèneglycol,
le dilaurate de polyéthylèneglycol,
le dimyristate de polyéthylèneglycol,
le dipalmitate de polyéthylèneglycol,
le distéarate de polyéthylèneglycol,
le dimyristate de polypropylèneglycol et
le dipalmitate de polypropylèneglycol
de la famille des diesters de polyoxyalkylèneglycol.

3. Moteur miniature selon la revendication 1 dans lequel le polymère est un polymère quelconque parmi
le monocaprate de polyéthylèneglycol,
le monolaurate de polyéthylèneglycol,
le monomyristate de polyéthylèneglycol,
le monopalmitate de polyéthylèneglycol et
le monostéarate de polyéthylèneglycol
de la famille des monoesters de polyoxyalkylèneglycol.

4. Moteur miniature selon l'une quelconque des revendications précédentes dans lequel l'espace défini par le boîtier (1) et le couvercle de boîtier (6) est rempli d'une atmosphère dudit polymère.

5. Moteur miniature selon l'une quelconque des revendications précédentes dans lequel un matériau poreux conçu pour contenir ledit polymère avant la vaporisation est disposé à l'intérieur du boîtier de moteur (1).
